# EUROPÄISCHE PATENTANMELDUNG

(11) **EP 3 190 677 A1**
(43) Veröffentlichungstag der Anmeldung: **12.07.2017**
(21) Anmeldenummer: 16202679.3
(22) Anmeldetag: 07.12.2016
(51) Int. Cl.: H02J 3/38

(54) **WINDENERGIEANLAGE MIT VERBESSERTEM GENERATOR-/UMRICHTERSYSTEM**

(30) Priorität: 09.01.2016 DE 102016001082
(71) Anmelder: Senvion GmbH, 22297 Hamburg (DE)
(72) Erfinder: Letas, Heinz-Hermann, 24796 Bovenau (DE)
(74) Vertreter: Glawe, Delfs, Moll

(57) **Zusammenfassung**

Windenergieanlage mit einem Generator (14) und einem Umrichter (2), wobei der Generator (14) eine Induktivität aufweist, an der ein maschinenseitiges Ende des Umrichters (2) angeschlossen ist, und ein netzseitiges Ende des Umrichters (2) an eine Netzanschlussleitung (16) angeschlossen ist. Erfindungsgemäß ist am maschinenseitigen Ende des Umrichters (2) eine Gleichtakt-Sperreinrichtung (4) angeschlossen, die als vektorielles Summationsglied für magnetische Flüsse in den Phasen der Verbindungsleitung (15) ausgebildet ist. Damit wird eine Verkettung zwischen den Phasen erreicht in der Weise, dass am Ausgang des maschinenseitigen Wechselrichters der Gleichtaktanteil der Spannung subtrahiert wird. Dies bewirkt, dass die an sich floatenden Phasenpotentiale am Ausgang des Umrichters zu einem gemeinsamen Niveau hin bewegt werden. Im Ergebnis ergibt sich somit durch das Subtrahieren des Gleichtaktanteils eine Verringerung der Spitzenspannungswerte in der Leitung zum Generator. Die Spannungsbelastung wird damit reduziert. Die Erfindung bezieht sich ferner auf ein entsprechendes Verfahren.

## Beschreibung

Die Erfindung betrifft eine Windenergieanlage mit einem Windrotor, einem damit angetriebenen Generator und einem Umrichter, der mit dem Generator zusammenwirkt zur Erzeugung elektrischer Leistung. Der Umrichter ist mit einem maschinenseitigen Ende an eine Induktivität des Generators angeschlossen. Die Erfindung betrifft ferner ein Verfahren zum Betreiben eines Umrichters einer solchen Windenergieanlage.

Für einen drehzahlvariablen Betrieb sind moderne Windenergieanlagen mit Umrichtern versehen. Derartige Umrichter umfassen üblicherweise zwei Wechselrichter, von denen einer mit dem Generator verbunden ist und der andere an das Netz angeschlossen ist; beide Wechselrichter sind über einen Gleichspannungs- oder Gleichstromzwischenkreis verbunden. Derartige Umrichter können als Vollumrichter, insbesondere mit einem Synchron- oder Asynchrongenerator, oder als Teilumrichter ausgeführt sein, letzteres insbesondere mit einer doppelt gespeisten Asynchronmaschine als Generator. Grundsätzlich ist es so, dass derartige Umrichter zumindest dann, wenn sie in der verbreiteten Bauart als Pulswechselrichter ausgeführt sind, mindestens eine Induktivität zur Glättung der Ströme benötigen. Bei dem maschinenseitigen Wechselrichter des Umrichters wird hierzu im Regelfall die im Generator stets vorhandene Induktivität der Generatorwicklung genutzt. Dies ist zwar effizient, bedeutet aber auch, dass in der Verbindungsleitung zwischen dem maschinenseitigen Wechselrichter und Generator gepulste Spannungen (und nicht sinusförmige) auftreten. Die Spannungsanforderungen sind deshalb im Bereich der Verbindungsleitung besonders hoch. Größenordnungsmäßig entsprechen sie etwa der Spannung im Zwischenkreis.

Zur Bewältigung der hohen Leistungen moderner Windenergieanlagen im mehrfachen Megawatt-Bereich werden die für die Niederspannungskomponenten, wie Umrichter und Generator, geltenden Spannungsgrenzen vorzugsweise voll genutzt. Ein Überschreiten der Spannungsgrenzen für den Niederspannungsbereich ist zu vermeiden, da dies erheblich verschärfte Anforderungen mit sich brächte, welche insbesondere in den baulich beengten Verhältnissen, wie sie in der Gondel bzw. im Turm einer Windenergieanlage herrschen, nur schwer zu erfüllen sind. Die Normen für Spannungsgrenzen im Niederspannungsbereich variieren von Land zu Land, jedoch gelten für Europa typischerweise Nennspannungen von maximal 1.000 Volt bei Wechselspannung und 1.500 Volt bei Gleichspannung. Wird der Umrichter nun jedoch für den maximalen, im Gleichspannungszwischenkreis zulässigen Spannungswert von etwa 1.500 Volt dc ausgelegt, so ergibt sich das Problem, dass sich in der Verbindungsleitung zum Generator infolge der dort auftretenden gepulsten Spannungen Spannungswerte von etwa 1.400 Volt bis 1.500 Volt ac ergeben würden. Dies ist mit den zulässigen Grenzen für Niederspannungsbetrieb nicht mehr vereinbar.

Zur Abhilfe ist erwogen worden, die kritische, da Spannungen oberhalb des Niederspannungsbereichs aufweisende Verbindungsleitung so kurz wie möglich zu gestalten, und dazu den Umrichter oben in der Gondel unmittelbar am Generator anzuordnen. Aber auch wenn somit diese kritische Verbindungsleitung auf eine kurze Strecke reduziert wäre, so wäre dennoch die Grenze für den Niederspannungsbereich überschritten und es wären die Mittelspannungsanforderungen zu erfüllen. Die ist aber wegen der beengten Verhältnisse in der Turmgondel praktisch kaum möglich.

Für Windenergieanlagen hoher Leistung besteht das Bedürfnis, die Spannung im Zwischenkreis und der Verbindungsleitung zu erhöhen, ohne den Niederspannungsbereich zu verlassen.

Der Erfindung liegt die Aufgabe zugrunde ein verbessertes Umrichter-/Generatorsystem zu schaffen, welches den Betrieb mit einer erhöhten Zwischenkreisspannung ermöglicht und dabei die Spannung in der Verbindungsleitung zum Generator möglichst gering hält. Insbesondere geht es darum, das im Stand der Technik etwa 1,4 betragende Spannungsverhältnis zwischen Spannung in der Verbindungsleitung zur Spannung im Zwischenkreis zu verringern.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem damit angetriebenen Generator, der mit einem Umrichter zusammenwirkt zur Erzeugung elektrischer Leistung, welche über eine Netzanschlussleitung abgegeben wird, wobei der Generator eine Induktivität aufweist, an der ein maschinenseitiges Ende des Umrichters angeschlossen ist, und ein netzseitiges Ende des Umrichters an die Netzanschlussleitung angeschlossen ist, ist erfindungsgemäß vorgesehen, dass am maschinenseitigen Ende des Umrichters eine Gleichtakt-Sperreinrichtung für die Verbindungsleitung angeordnet ist, die als ein vektorielles Summationsglied für magnetische Flüsse der Phasen der Verbindungsleitung ausgebildet ist. Insbesondere ist die Gleichtakt-Sperreinrichtung so ausgebildet, dass sie für jede Phase eine eigene Wicklung aufweist, und die Wicklungen gleichsinnig auf einem gemeinsamen Kern angeordnet sind.

Nachfolgend seien zuerst einige verwendete Begriffe erläutert:
Unter gleichsinnig wird verstanden, dass die Wicklungen bezogen auf die Stromflussrichtung einen magnetischen Fluss in jeweils gleicher Richtung erzeugen.

Unter einem gemeinsamen Kern wird verstanden, dass alle Wicklungen von demselben magnetischen Fluss durchflutet sind.

Die Erfindung beruht auf dem Gedanken, mittels der drei gleichsinnigen und gleichartigen Wicklungen, die jeweils in eine Phase der Verbindungsleitung zwischen maschinenseitigem Ende des Umrichters und Generator eingeschleift sind, eine Verkettung zwischen den Phasen zu schaffen. Damit wird der Gleichtaktanteil in der Spannung am Ausgang des maschinenseitigen Wechselrichters subtrahiert. Indem der Gleichtaktanteil subtrahiert wird, werden die durch das Schalten der Stromventile des Umrichters bewirkten floatenden Phasenpotentiale am Ausgang des Umrichters zu einem gemeinsamen Null-Niveau (Erde) hin bewegt. Das Potential der einzelnen schwankt damit nicht mehr hin und her, sodass die Spannungsspitzenwerte sich durch das Vermeiden des Hin- und Herspringens verringern. Die verkettete Betriebsspannung ändert sich hingegen nicht. Ferner behindert die erfindungsgemäße Gleichtakt-Sperreinrichtung den Durchfluss der Betriebsströme in den einzelnen Phasen nicht.

Im Ergebnis ergibt sich somit durch das Subtrahieren des Gleichtaktanteils aus der am Ausgang des Umrichters anliegenden Pulswechselspannung eine Verringerung der Spitzenspannungswerte, da nunmehr der Gleichtaktanteil aus der Spannung herausgenommen ist. Ergaben sich vorher bspw. bei einer Zwischenkreisspannung von 1.500 Volt dc aufgrund der floatenden Phasenpotentiale in der Verbindungsleitung Spannungen entsprechend einem Wert von 1.400 Volt bis 1.500 Volt ac, so kann die Spannungsanforderung dort dank der Erfindung reduziert werden auf etwa 1.000 Volt ac mittels der Gleichtaktunterdrückung. Damit ermöglicht es die Erfindung, trotz voller Ausnutzung der maximal zulässigen Spannung für Gleichspannung auch die maximale Wechselspannung innerhalb der Anforderung für den Niederspannungsbereich (<1.000 Volt ac) zu halten. Die Isolationsanforderungen an die Verbindungsleitung zwischen Umrichter und Generator sind damit geringer, und es genügt die Erfüllung der Anforderungen für den Niederspannungsbereich. Mit anderen Worten wird das Verhältnis von Wechselspannung am Ausgang des maschinenseitigen Umrichters zur Spannung im Zwischenkreis auf Werte von 0,7 oder geringer verbessert.

Zweckmäßigerweise ist die Gleichtakt-Sperreinrichtung derart ausgebildet, dass sie für jede Phase eine eigene Wicklung aufweist, und die Wicklungen gleichsinnig auf einen gemeinsamen Kern angeordnet sind. Durch die gleichsinnige Anordnung auf einen einzigen gemeinsamen Kern wird erreicht, dass alle drei Wicklungen von demselben magnetischen Fluss durchflossen sind. Anders ausgedrückt findet eine vektorielle Addition der durch die jeweiligen Phasenströme, welche durch die einzelnen Wicklungen fließen, bewirkten magnetischen Durchflutung statt. Ändern sich die Ströme in allen drei Phasen gleichartig, ändert sich entsprechend die magnetische Durchflutung in dem gemeinsamen Kern, und es entsteht aufgrund der Induktivität eine Gegeninduktion, welche den gleichartigen Anteil in den Phasenströmen entgegenwirkt. Nicht gleichartige Anteile (mithin also solche im Gegentakt) sind hiervon nicht betroffen. Damit wirken die auf einem gemeinsamen Kern angeordneten phaseneigenen Wicklungen gemeinsam als Drossel derart, dass Gleichtaktänderungen unterdrückt und Gegentaktanteile nicht verändert werden. Insgesamt ergibt sich somit eine Unterdrückung unerwünschter Gleichtaktanteile.

Vorzugsweise ist der gemeinsame Kern als ein umlaufender Körper, insbesondere als ein Ring ausgeführt. Damit ergibt sich eine geschlossene magnetische Durchflutung, und somit eine hohe Induktivität. Die erfindungsgemäße Gleichtakt-Unterdrückungswirkung wird damit verstärkt. Besonders zweckmäßig ist es, wenn der gemeinsame Kern geblecht ausgeführt ist. Damit wird das Entstehen unerwünschter, parasitärer Wirbelströme im Kern verhindert. Dies ist insbesondere im Hinblick auf die hohen Schaltfrequenzen der im Umrichter verwendeten Wechselrichter und dessen Stromventile von großem Vorteil. Denn zur Vermeidung unerwünschter negativer Wirkungen muss der Kern der Gleichtakt-Sperreinrichtung auf diese hohen Schaltfrequenzen dimensioniert sein. Weiter zweckmäßig ist es, den Kern spaltfrei auszuführen, um eine möglichst hohe magnetische Durchflutung im Bereich der Wicklungen zu gewährleisten.

Bei der bevorzugten Ausführungsform sind für die Phasen sternförmig geschaltete Kondensatoren vorgesehen. Unter sternförmig wird verstanden, dass die Kondensatoren jeweils mit einem ihrer zwei Anschlüsse an der Phase angeschlossen und mit den anderen ihrer zwei Anschlüsse auf einen gemeinsamen Verknüpfungspunkt (Sternpunkt) angeschlossen sind. Damit kann eine bessere Spannungshaltung in den einzelnen Phasen erreicht werden.

Vorzugsweise ist zwischen der Gleichtakt-Sperreinrichtung und dem Generator in der Verbindungsleitung ein Netzfilter mit einer gesonderten Induktivität vorgesehen. Die gesonderte Induktivität des Netzfilters ist phasenindividuell. Sie ist i.d.R. deutlich kleiner dimensioniert als die Induktivität der Wicklungen der Gleichtakt-Sperreinrichtung, und zwar mindestens um eine Größenordnung. Hierdurch werden die sich aus dem hochfrequenten Schalten der Stromventile des Wechselrichters ergebenden gepulsten Spannung bzw. Spannungssprünge abgemildert. Letztlich erfolgt dies dadurch, dass durch die Netzwirkung die Flankensteilheit reduziert wird. Vorzugsweise weisen die Netzfilter eine eigene Kapazität für jede Phase auf. Zweckmäßigerweise sind sie als L-C-Filter oder als L-C-L-Filter ausgeführt, wobei der Buchstabe L für eine Induktivität in jeder Phase und der Buchstabe C für eine Kapazität für jede Phase steht.

Mit Vorteil ist der Umrichter mit der Gleichtakt-Sperreinrichtung im Turmfuß der Windenergieanlage angeordnet. Damit ist erreicht, dass dank der erfindungsgemäß ermöglichten hohen Nennspannung in der Verbindungsleitung zum Generator (typischer Weise 1.000 Volt ac) deutlich kleinere Verluste in der Verbindungsstrecke zwischen Turmfuß und Gondel mit dem dort angeordneten Generator anfallen, als es der Fall wäre bei einer Anordnung des Umrichters in der Gondel. Wegen des quadratischen Zusammenhangs zwischen Spannung bzw. Strömen einerseits und Verlustleistung andererseits ergibt sich durch die dank der Anordnung des Umrichters im Turmfuß ermöglichte Spannungserhöhung in der Verbindungsleitung eine beträchtliche Verringerung der Verlustleistung für die durch den vom Turmfuß zur Gondel führenden Leitung. In der Praxis ist dies ein äußerst bedeutender Vorteil.

Die Erfindung erstreckt sich ferner auf ein Verfahren zum Betreiben eines Umrichters von Windenergieanlagen mit einem netzseitigen Wechselrichter, einem maschinenseitigen Wechselrichter und einem die beiden Wechselrichter verbindenden Zwischenkreis, wobei der maschinenseitige Wechselrichter den Generator mit mehreren Phasen ansteuert, die floatende Phasenpotentiale haben, umfassend ein Unterdrücken eines Gleichtaktanteils in den floatenden Phasenpotentialen mittels *vektoriellem* Addieren der magnetischen Flüsse aller Phasen. Zur näheren Erläuterung wird auf vorstehende Ausführungen verwiesen.

Die Erfindung wird nachfolgend unter Bezugnahme auf die beigefügte Zeichnung anhand eines Beispiels näher erläutert. In der Zeichnung zeigen:
- Fig. 1:: eine Übersichtsdarstellung für ein Ausführungsbeispiel einer erfindungsgemäßen Windenergieanlage;
- Fig. 2 a,b:: einen schematisierten Stromlaufplan für Generator und Umrichter einer solchen Windenergieanlage für zwei verschiedene Ausführungsformen des Generators;
- Fig. 3:: eine Darstellung zeigend die Anordnung einer Gleichtakt-Sperreinrichtung gemäß der Erfindung;
- Fig. 4a, b:: Diagramme darstellend die Phasenpotentiale vor und nach der erfindungsgemäßen Gleichtakt-Sperreinrichtung; und
- Fig. 5:: einen Stromlaufplan für eine Windenergieanlage gemäß dem Stand der Technik.

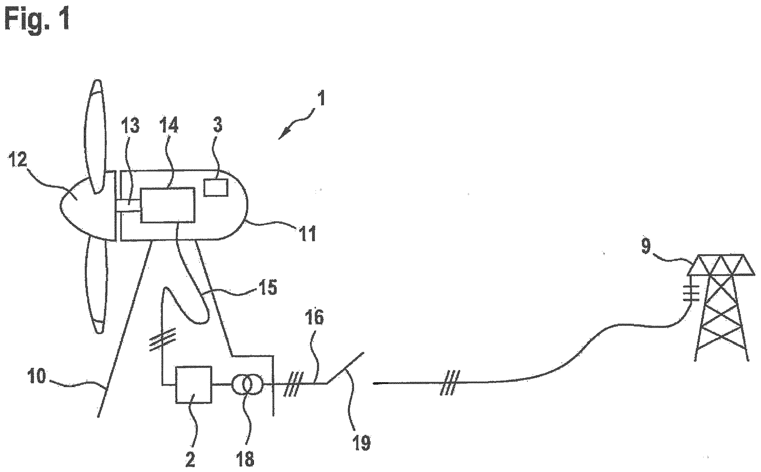

Ein Ausführungsbeispiel für eine Windenergieanlage 1 gemäß der Erfindung ist in Fig. 1 dargestellt. Sie umfasst einen Turm 10, auf dem eine in Azimutrichtung schwenkbare Gondel 11 befestigt ist. An ihrer einen Stirnseite ist ein Windrotor 12 drehbar angeordnet. Er umfasst eine Nabe mit einem oder mit mehreren Rotorblättern und treibt über eine Rotorwelle 13 (und optional über ein nicht dargestelltes Getriebe) einen Generator 14 an. Dieser wandelt die vom Windrotor 12 aus dem Wind erzeugte mechanische Leistung in elektrische Leistung um. Bei dem Generator 14 handelt es sich um einen Synchron- oder Asynchrongenerator, es können aber auch andere Generatorbauarten vorgesehen sein, insbesondere doppelt gespeiste Asynchronmaschinen. Angeschlossen an dem Generator 14 ist ein Umrichter 2, der im Fuß des Turms 10 angeordnet ist.

Der Generator 14 in der Gondel 11 ist mit dem Umrichter 2 im Turm 10 verbunden mittels einer Verbindungsleitung 15. Sie ist in an sich bekannter Weise verdrillfest ausgeführt derart, dass die Gondel 11 eine oder mehrere Umdrehungen relativ zum Turm 10 ausführen kann, und das Verbindungskabel 15 eine daraus resultierende Verdrillung aufnehmen kann, bis schließlich ein Entdrillen des Verbindungskabels 15 durch entsprechendes Zurückdrehen der Gondel 11 erforderlich wird. Diese Verdrillbarkeit der Verbindungsleitung 15 ist durch den S-Schlag in Fig. 1 symbolisiert. Angemerkt sei, dass die Verbindungsleitung 15 wegen der Turmhöhe und wegen ausreichendem Längenzuschlag zur Gewährleistung der Verdrillbarkeit eine beträchtliche Länge aufweist, die häufig deutlich über 100 m beträgt. Bei derzeitigen Windenergieanlagen der Leistungsklasse von etwa 3-5 MW ergeben sich Nabenhöhen von gut 150 m, und somit eine entsprechende Mindestlänge für die Verbindungsleitung 15. Da die Verbindungsleitung 15 den gesamten Turm 10 durchquert, fallen entlang ihr nicht nur erhebliche Stromwärmeverluste an, sondern sie befindet sich auch in einem für Wartungspersonal zugänglichen Bereich, und es muss daher ein entsprechender Spannungsschutz eingehalten werden. Die Spannung in der Verbindungsleitung 15 kann also zur Verringerung der Stromwärmeverluste nicht beliebig erhöht werden. Bei einer Spannung von 1.000 Volt ac besteht hierbei eine praktische Grenze, da ansonsten der Niederspannungsbereich verlassen würde. Damit besteht die Anforderung, innerhalb dieses Spannungsbereichs eine möglichst große Leistung möglichst verlustarm zu übertragen.

Ferner ist in der Gondel 11 eine Betriebssteuerung 3 angeordnet, welche den Betrieb der gesamten Windenergieanlage 1 überwacht. Der Umrichter 2 gibt die Leistung über eine Anschlussleitung 16 mit einem daran angeordneten, optionalen Netzfilter 6 über einen Leistungsschalter 17 an einen Mittelspannungstransformator 18 ab zur Weiterleitung in ein Netz 9 über einen zweiten Leistungsschalter 19.

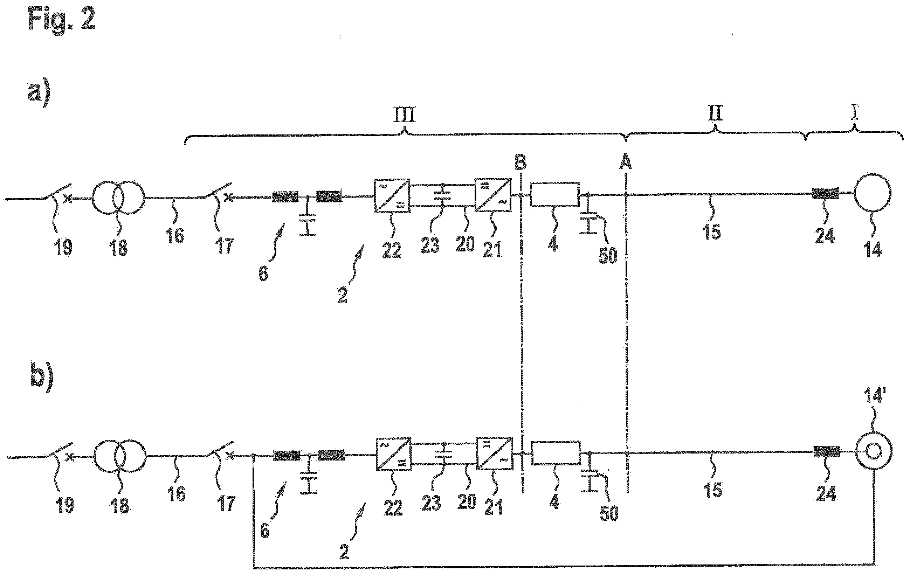

Ein elektrisches Schaltdiagramm für eine derartige Windenergieanlage mit einem Synchrongenerator als Generator 14 ist in Fig. 2a dargestellt. Der Leistungsfluss ist von rechts nach links. Aus Übersichtsgründen ist in Fig. 2 eine einphasige Ersatzdarstellung gewählt.

Man erkennt den Generator 14, der über optionale Filter 24 mit dem Umrichter 2 verbunden ist. Genauer gesagt ist jede Phase des Synchron- oder Asynchrongenerators 14 angeschlossen an eine Phase eines maschinenseitigen Wechselrichters 21 des Umrichters 2. Der Umrichter 2 umfasst ferner einen netzseitigen Wechselrichter 22, der mit dem maschinenseitigen Wechselrichter 21 über einen Gleichspannungszwischenkreis 20 verbunden ist. Als Energiespeicher enthält der Gleichspannungszwischenkreis 20 einen Kondensator 23.

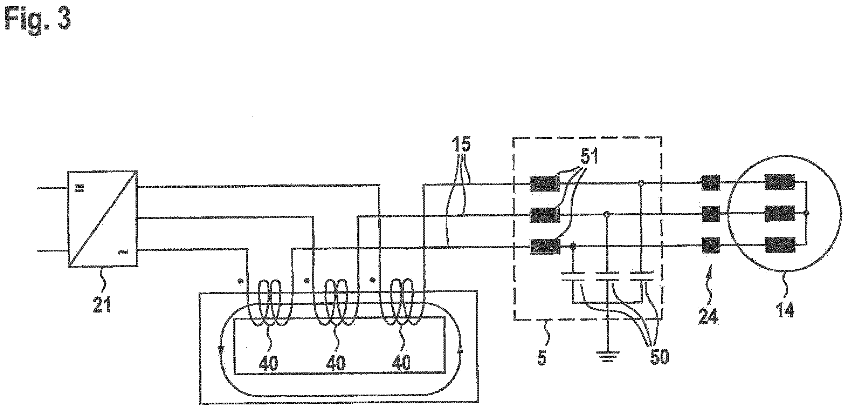

Von den vorgenannten Komponenten ist der Generator 14 mit dem ihm zugeordneten Filtern 24 (s. Fig. 3) in der Gondel 11 angeordnet. Diese in der Gondel angeordnete, erste Bauteilegruppe ist in Fig. 2 durch eine geschweifte Klammer mit der Gruppenbezeichnung I dargestellt. Der Hauptteil der Verbindungsleitung 15, welcher im Turm 10 verläuft, bildet die zweite Bauteilegruppe, welche durch eine geschweifte Klammer mit der Gruppenbezeichnung II gekennzeichnet ist. Die übrigen im oder am Turmfuß angeordneten Komponenten bilden die dritte Bauteilegruppe, welche mit der Gruppenbezeichnung III gekennzeichnet ist. Eine Variante ist in Fig. 2b dargestellt, bei der als Generator eine doppelt gespeiste Asynchronmaschine 14' vorgesehen ist. Hierbei ist in an sich bekannter Weise der Umrichter 2 als ein Teilumrichter ausgeführt und am Rotor angeschlossen, während der Stator der doppelt gespeisten Asynchronmaschine 14' direkt an die Anschlussleitung 16 angeschlossen ist.

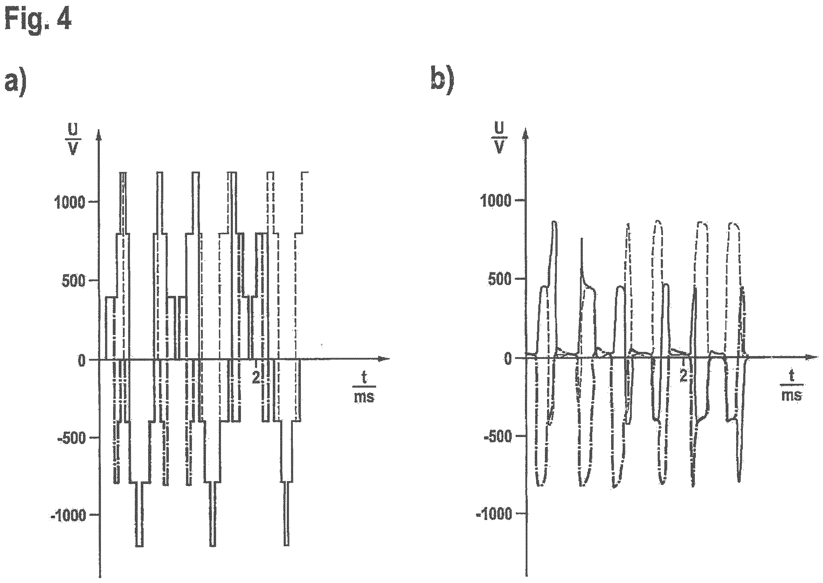

Die vom Generator 14 erzeugte elektrische Leistung wird, nachdem sie die am Generator angeordneten Netzfilter 24 passiert hat, über die Verbindungsleitung 15 an den Umrichter 2, genauer gesagt dessen maschinenseitigen Wechselrichter 21 angelegt. Erfindungsgemäß erfolgt dies jedoch nicht direkt, sondern es ist die erfindungsgemäße Gleichtakt-Sperreinrichtung 4 generatorseitig an dem Wechselrichter 21 angeordnet. Sie ist in allen drei Phasen eingeschleift. Ihr Aufbau ist in Fig. 3 dargestellt. Die Gleichtakt-Sperreinrichtung 4 umfasst drei gleichartige Wicklungen 40, die gleichsinnig auf einen gemeinsamen Kern 41 angeordnet sind. Der Kern 41 ist umlaufend ausgeführt mit zwei parallel angeordneten Schenkeln 42 und zwei die Schenkel an ihren jeweiligen Enden verbindenden Jochen 43. Die Wicklungen 40 sind in dem dargestellten Ausführungsbeispiel sämtlich auf einem einzigen Schenkel 42 nebeneinanderliegend, also nicht überlappend, angeordnet; sie könnten aber auch zumindest teilweise auf dem anderen Schenkel 42 angeordnet sein, oder auf einem Mantelkern (nicht dargestellt). Jede der Windungen 40 ist einer der Phasen der Verbindungsleitung 15 zugeordnet und in diese eingeschleift. Dazu ist jede Wicklung 40 mit ihrem einen Ende mit einem umrichterseitigen Teil der Verbindungsleitung 15 und mit ihrem anderen Ende mit dem generatorseitigen Teil der Verbindungsleitung 15 verbunden. Die Wicklungen 40 weisen jeweils dieselbe Windungszahl auf und sind gleichsinnig gewickelt. Somit sind sämtliche Wicklungen 40 von demselben magnetischen Fluss 44 durchflossen. Es ergibt sich somit eine induktive Verkopplung der Wicklungen 40. Dies erfolgt in der Art, dass aus der Spannung B, welche einen Gleichtaktanteil und einen Wechselanteil aufweist, der Gleichtaktanteil mittels der durch die Anordnung der Wicklungen 40 auf dem gemeinsamen Kern 41 bewirkten Verkettung subtrahiert wird. Damit ist die Spannung (s. Messpunkt A) um den Gleichtaktanteil vermindert. Der Wechselanteil in den einzelnen verketteten Phasen ändert sich durch die Gleichtakt-Sperreinrichtung 4 nicht. Anders ausgedrückt werden durch die Gleichtakt-Sperreinrichtung die floatenden Potentiale (s. Messpunkt B) auf einen gemeinsamen Bezugspunkt (i.d.R. Erde) gebracht, und somit auf ein gemeinsames Potential zurückgeführt. Am Ausgang des generatorseitigen Umrichters 21 am Messpunkt B kann durch das gepulste Schalten der Stromventile im Wechselrichter 21 das Potential abhängig von der Zwischenkreisspannung (im Ausführungsbeispiel 1.500 Volt) schwanken, und zwar nicht nur zwischen +1.500 Volt und -1.500 Volt, sondern unter Berücksichtigung weiterer kurzzeitiger Spannungsspitzen können sich Spitzenspannungen im Bereich von +2.000 Volt bis -2.000 Volt (gegen Erde) ergeben. Dies ist in Fig. 4a dargestellt.

Durch die erfindungsgemäße Gleichtakt-Sperreinrichtung 4 wird aus den Spannungspotentialen, wie sie am Messpunkt B anliegen, der Gleichtaktanteil unterdrückt. Vorzugsweise sind noch weitere Kondensatoren 50 als Teil eines LC-Filters 5 angeordnet, welche zusätzlich dazu beitragen, die Phasenpotentiale gegen Erde zu halten. Damit werden die Phasenpotentiale um den Erdpunkt normalisiert, und es ergeben sind somit niedrigere Spitzenspannungen und Effektivwerte. Dies ist in Fig. 4b dargestellt. Im Ergebnis (s. Messpunkt A) liegen somit die Spitzenspannungen unter 1.400 Volt und somit liegt der Effektivwert bei etwa 1.000 Volt ac, mithin also innerhalb der Anforderungen für den Niederspannungsbereich. Die Verbindungsleitung 15 zwischen der Gleichtakt-Sperreinrichtung 4 einerseits und der Generator 14 andererseits, welche durch den gesamten Turm 10 verläuft, liegt somit im Niederspannungsbereich und braucht damit auch nur die Anforderungen gemäß Niederspannungsrichtlinie zu erfüllen. Dies ist dank der erfindungsgemäßen Gleichtakt-Sperreinrichtung kompatibel mit einer hohen Zwischenkreisspannung, die vorliegend ausgelegt ist auf den Maximalwert für den Niederspannungsbereich, nämlich 1.500 Volt dc.

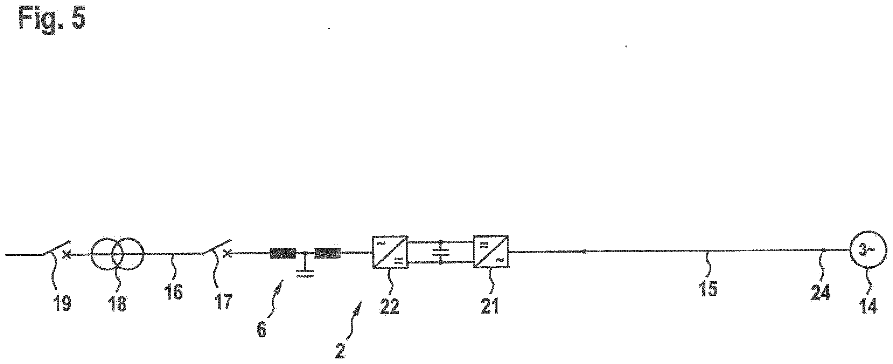

Es ergeben sich damit erheblich günstigere Verhältnisse, als im Stand der Technik bisher erreicht werden konnten. Es wird verwiesen auf die Fig. 5. Dort ist ein Schaubild entsprechend Fig. 2a dargestellt. Gleichartige Elemente tragen dieselben Bezugsziffern. Der Generator 14, Umrichter 2 mit generatorseitigem Wechselrichter 21 und netzseitigem Wechselrichter 22, welche über einen Gleichstromzwischenkreis verbunden sind, Netzfilter 6 in der Netzanschlussleitung 16, Leistungsschalter sowie Mittelspannungstransformator 18 zur Verbindung mit einem Netz 9 entsprechen dem erfindungsgemäßen Aufbau gemäß Fig. 2a. Dem Stand der Technik fehlt jedoch die erfindungsgemäße Gleichtakt-Sperreinrichtung 4. In der Folge ist der generatorseitige Wechselrichter 21 mit der Verbindungsleitung 15 direkt mit dem Generator 14 verbunden. Die durch das Schalten von Stromventilen in dem generatorseitigen Wechselrichter 21 bewirkten und somit floatenden Potentiale liegen in der gesamten Verbindungsleitung 15 an. Es kann daher in dieser Verbindungsleitung 15 eine Dimensionierung nur auf eine Wechselspannung von etwa 730 Volt ac erfolgen, da wegen der Pulsationen eine Spitzenspannung von 1.400 Volt bereits zu erwarten ist (Spitzenspannung bei 730 Volt ac entsprechend 1.100 Volt + Zuschlag für Spannungsspitzen von 400 Volt). Da durch den pulsierenden Betrieb des generatorseitigen Wechselrichters 21 beim Schalten kurzzeitige Spannungsspitzen +/- 400 Volt auftreten können, wie vorstehend für die erfindungsgemäße Ausführung erläutert, ist unter Zugrundelegung der zulässigen Spitzenspannung für den Niederspannungsbereich von 1.500 Volt nur ein effektiver Spitzenspannungshub von +/- 1.100 Volt nutzbar, woraus bei herkömmlicher Auslegung eine Dimensionierung auf einen Effektivwert von etwa 730 Volt ac resultiert. Bei höherer Auslegung können die Anforderungen hinsichtlich Einhaltung des Niederspannungsbereichs nicht mehr sicher erfüllt werden. - Demgegenüber erlaubt die erfindungsgemäße Ausführung dank der Gleichtakt-Unterdrückung eine Steigerung des Effektivwerts in der Verbindungsleitung 15 auf 1.000 Volt ac, mithin also eine Steigerung um 37%. Dies ist eine erhebliche Spannungssteigerung, welche zu einer entsprechenden Verminderung der Ströme führt und in der Folge wegen des quadratischen Zusammenhangs für die Stromwärmeverluste (Pᵥ=I²*R) nahezu eine Halbierung der Stromwärmeverluste erreicht.

Zur weiteren Verbesserung kann optional ein Filter 5 vorgesehen sein. Es umfasst Kondensatoren 50, die jeweils an einer der Phasen angeschlossen sind mit einem Anschluss und deren anderer Anschluss auf einen gemeinsamen Sternpunkt geschaltet ist. Auf diese Weise wird die Potentialhaltung gegenüber Erde erleichtert. Vorzugsweise sind zusätzlich noch Induktivitäten 51 in den Phasenleitungen 15 zwischen der Gleichtakt-Sperreinrichtung 4 einerseits und dem Generator andererseits im Bereich der Kondensatoren 50 angeordnet. Sie bilden zusammen mit den Kondensatoren 50 ein L-C-Filter 5 und bewirken somit eine Verringerung der Flankensteilheit der durch das Schalten der Stromventile im generatorseitigen Wechselrichter 21 bewirkten Schaltpulse. Das L-C-Filter 5 kann mittels weiterer Induktivitäten (nicht dargestellt) zu einem L-C-L-Filter erweitert sein.

## Patentansprüche

1. Windenergieanlage mit einem Windrotor (12), einem damit angetriebenen Generator (14), der mit einem Umrichter (2) zusammenwirkt zur Erzeugung elektrischer Leistung, welche über eine Netzanschlussleitung (18) abgegeben wird, wobei der Generator (14) eine Induktivität aufweist, an der ein maschinenseitiges Ende des Umrichters (2) angeschlossen ist, und ein netzseitiges Ende des Umrichters (2) an die Netzanschlussleitung (16) angeschlossen ist,
**gekennzeichnet dadurch, dass**
am maschinenseitigen Ende des Umrichters (2) eine Gleichtakt-Sperreinrichtung (4) für die Verbindungsleitung (15) angeschlossen ist, die als vektorielles Summationsglied für magnetische Flüsse in den Phasen der Verbindungsleitung (15) ausgebildet ist.

2. Windenergieanlage nach Anspruch 1, **dadurch gekennzeichnet, dass** die Gleichtakt-Sperreinrichtung (4) für jede Phase eine eigene Wicklung (40) aufweist, und die Wicklungen (40) gleichsinnig auf einem gemeinsamen Kern (41) angeordnet sind.

3. Windenergieanlage nach Anspruch 2, **dadurch gekennzeichnet, dass** der Kern (41) ein umlaufender Körper, insbesondere ein Ring ist.

4. Windenergieanlage nach Anspruch 3, **dadurch gekennzeichnet, dass** der Kern (41) geblecht und/oder spaltfrei ausgeführt ist.

5. Windenergieanlage nach einem der vorangehenden Ansprüche, **dadurch gekennzeichnet, dass** für die Phasen der Verbindungsleitung (15) sternförmig geschaltete Kondensatoren (50) vorgesehen sind.

6. Windenergieanlage nach Anspruch 5, **dadurch gekennzeichnet, dass** die Kondensatoren (50) mit jeweils einem ihrer beiden Anschlüsse an der Phase und mit ihrem anderen Anschluss gemeinsam am Erdpotential angeschlossen sind.

7. Windenergieanlage nach einem der vorangehenden Ansprüche, **dadurch gekennzeichnet, dass** zwischen der Gleichtakt-Sperreinrichtung (4) und dem Generator (14) in der Verbindungsleitung (15) ein Filter mit gesonderter Induktivität vorgesehen ist.

8. Windenergieanlage nach Anspruch 7, **dadurch gekennzeichnet, dass** die Induktivität des Filters wesentlich geringer ist als diejenige der Wicklungen (40) der Gleichtakt-Sperreinrichtung (4).

9. Windenergieanlage nach einem der vorangehenden Ansprüche, **dadurch gekennzeichnet, dass** der Umrichter (2) im Turmfuß angeordnet ist, und die Verbindungsleitung (15) durch den Turm (10) führt.

10. Verfahren zum Betreiben eines Umrichters (2) von Windenergieanlagen (1), mit einem netzseitigen Wechselrichter (22), einem generatorseitigen Wechselrichter (21) und einem die beiden Wechselrichter (21,22) verbindenden Zwischenkreis (20), wobei der generatorseitige Wechselrichter (21) den Generator (14) mit mehreren Phasen ansteuert, die floatende Phasenpotentiale aufweisen,
**gekennzeichnet durch**,
Unterdrücken eines Gleichtaktanteils der floatenden Phasenpotentiale, und
vektorielles Addieren der magnetischen Flüsse aller Phasen.

11. Verfahren nach Anspruch 10, **gekennzeichnet durch** Verwenden einer Gleichtakt-Sperreinrichtung nach einem der Ansprüche 2 bis 9.
